# EUROPEAN PATENT SPECIFICATION

(11) **EP 1 736 357 B1**
(45) Date of publication and mention of the grant of the patent: **30.05.2018**
(21) Application number: 05727967.1
(22) Date of filing: 31.03.2005
(51) Int. Cl.: B60N 3/04, B32B 5/26, B32B 27/12, B60R 13/08, G01K 11/16

(54) **MOLDED SPREADING INTERIOR TRIM MATERIAL FOR AUTOMOBILE**
GEFORMTES INNENAUSSTATTUNGSMATERIAL FÜR KRAFTFAHRZEUG
MATERIAU DE MOULURE INTERIEURE D'ETALEMENT MOULE POUR AUTOMOBILE

(30) Priority: 09.04.2004 JP 2004115261
(43) Date of publication of application: 27.12.2006
(73) Proprietor: Hayashi Telempu Corporation, Nagoya-shi, Aichi 460-0013 (JP)
(72) Inventor: MATSUURA, Akihiro, c/o Hayashi Engineering Inc., Nagoya-shi, Aichi 4600013 (JP); IMAMURA, Masahito, c/o Hayashi Engineering Inc., Nagoya-shi, Aichi 4600013 (JP); IWATA, Syuzo, c/o Hayashi Engineering Inc., Nagoya-shi, Aichi 4600013 (JP); NAKAMURA, Toshiyuki, c/o Hayashi Engineering Inc., Nagoya-shi, Aichi 4600013 (JP); KUNO, Kouji, c/o Hayashi Engineering Inc., Nagoya-shi, Aichi 4600013 (JP)
(74) Representative: Cabinet Plasseraud
(86) International application number: PCT/JP2005/006236
(87) International publication number: WO 2005/097547

(56) References cited:
- EP-A2- 1 323 577
- JP-A- 2002 036 405
- JP-A- 2003 208 183

## Description

### Technical Field

The present invention relates to an interior trim material for decorating the automobile interior, and in particular, relates to molded interior trim installation material for an automobile, which is three-dimensionally formed into a shape that matches the shape of a portion of the automobile where the molded interior trim installation material is installed.

### Background Art

Conventionally, various interior trim materials are installed on a steel plate in the interior of an automobile, and design and sense of touch are enhanced.

An interior trim installation material covers the steel panel as above mentioned and mainly serves to enhance the design in the interior of the automobile. Also, an interior trim material for an automobile is often required to serve as soundproof material to absorb and/or to insulate various noises (load noise, engine noise, wind roar, and the like) that are generated when the automobile is driven. In particular, since road noise is apt to enter from the floor direction of the automobile, various structures of a floor installing material that is installed along a floor and a vertical wall are proposed to enhance sound absorption and sound insulation.

In particular, there are proposals in which the interior trim material has multiple layers, that is, a layer made of materials excellent in sound absorption or sound insulation is laminated behind the design layer of the surface in order to enhance sound absorption or sound insulation while ensuring that the interior trim material has an appropriate design.

Japanese Patent Publication No. 2003-208183 discloses a floor laying material, a piece mat, and an arranging structure. Floor laying material 10 comprises carpet layer 11 having joining strips 11a of thermoplastic resin discontinuously arranged on the back surface thereof, and buffer material layer 12 layered to the back surface of carpet layer 11 through joining strips 11a. Carpet layer 11 has its front-to-back flow resistance value adjusted between 100 Nsm⁻³ and 1000 Nsm⁻³. Further, buffer material layer 12 is made of a material having an air wrapping property and has its front-to-back flow resistance value adjusted between 40 Nsm⁻³ and 800 Nsm⁻³.

Japanese Patent Publication No. 2002-036405 discloses a mat-like base formed by mutually joining heat-resistant fibers by a thermoplastic resin. A heat-resistant rigid resin layer composed of a heat-resistant rigid resin having a melt temperature higher than that of the thermoplastic resin, and a heat-activated resin layer composed of a heat-activated resin are sequentially laminated on one face of the mat-like base, and through holes having aperture areas are dispersedly formed on the heat-resistant rigid resin layer and the heat-activated resin layer.

As a typical example, Japanese Patent Publication No. 2000-516175 (see Fig.1) discloses "a multi-functional kit 51 for forming a sound absorption, sound insulation, vibration damping, and heat insulating cover, in particular, in floor sound insulation, end wall sound insulation, a door cover, and a roof inside cover, in order to reduce noise and to insulate heat in motor vehicles, characterized in that the kit comprises at least one sheet-like vehicle part 58 and a noise-reducing assembly package 52 consisting of several layers, wherein the assembly package has a foam layer having at least one porous springing layer 56 which has, in particular, opened pores; air layer 57 is arranged between assembly package 52 and sheet-like vehicle part 58; in order to form ultralight kit 51 that is suitable to optimally combine sound insulation, sound absorption, and vibration damping, multi-layer assembly package 52 has no heavy layer and comprises stiff layer 55 having microporous, in particular, a fiber layer or a fiber/foam complex layer having open pores; and stiff layer 55 has a total air flow resistance between Rₜ = 500 Nsm⁻³ and Rₜ = 2,500 Nsm⁻³, in particular, between Rₜ = 900 Nsm⁻³ and Rₜ = 2,000 Nsm⁻³, and has a weight per unit area between m_{F} = 0.3kg/m² and m_{F} = 2.0kg/m², in particular, between m_{F} = 0.5kg/m² and m_{F} = 1.6kg/m²". This sound insulation kit is intended to enhance the sound insulation capability by controlling the flow resistance value (air permeability) of microporous stiff layer 55 having microporous between 500 and 2500 Nsm⁻³.

Now, when such a sound insulation kit is used as interior trim material for an automobile, a design layer is often required to be added on the surface of the kit. In the above document, Claim 3 discloses "the kit according to Claim 1 or 2, characterized in that assembly package 52 is provided with porous cover layers 53, 54, in particular, a soft dressing layer or a carpet layer, or a protection fleece that is resistant to contamination". However, this document gives no description about flow resistance values of the dressing layer and the carpet layer.

The inventors made and examined the sound insulation kit in accordance with the subject of this document, and confirmed that the characteristic of the sound insulation kit varied remarkably due to laminating such a dressing layer or a carpet layer. Therefore, in actually, there is a need to control the entire flow resistance value including the dressing layer.

Also, when an adhesive layer for adhering the dressing layer to the surface of the sound insulation kit is formed, the form of the adhesive layer has a large influence on the sound insulation characteristic, and in particular, when an adhesive layer with poor permeability is formed, the performance of the sound insulation kit is largely lowered.

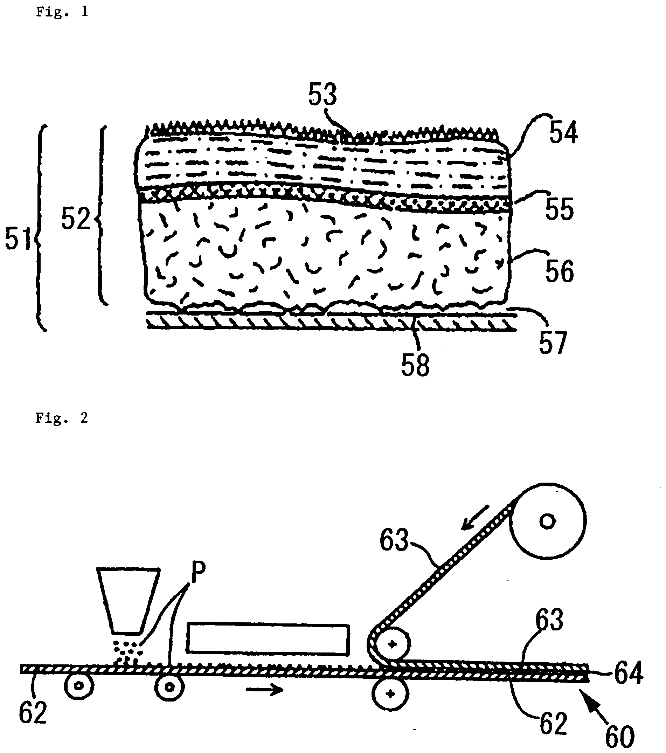

As the proposal to solve the problem, Japanese Patent Laid-Open No. 2002-219989 (see Fig. 2) discloses "vehicle carpet 60 formed by adhering and integrating surface material layer 63 and sound absorption layer 62 made of a nonwoven fabric by the medium of adhesive resin layer 64, characterized in that adhesive resin layer 64 is made of a air permeable resin layer formed by heating and melting thermoplastic resin powder P, and the air permeability of the entire carpet in the thickness direction is set within the range from 1 to 50 (cm³/cm^{2.}sec). According to this arrangement, sound absorption layer 62 and surface material layer 63 are adhered without lowering the air permeability by using adhesive layer 64 formed of resin in powder form, in order to maintain high sound insulation and absorption capacity.

### Disclosure of Invention

The above mentioned conventional art (Japanese Patent Laid-Open No. 2002-219989) has the following problems.
(1) It is difficult to finely adjust the distribution amount of thermoplastic resin powder P in the adhesive layer that is formed by distributing thermoplastic resin powder P, resulting in unevenness of the flow resistant value (air permeability) of the laminate after the adhering process in some cases.
(2) Because of the manufacturing method, the powder granulating process is required, and the cost and the energy consumption are disadvantageous for the process.

The present invention is intended to solve the above-mentioned problems.

A molded interior trim installation material for an automobile according to the present invention for this purpose is formed by laminating an air permeable design layer, a shape-retaining felt layer, and an porous adhesive layer, and is formed in a three-dimensional shape that matches the shape of a portion of the automobile where the molded interior trim installation material is installed. The air permeable design layer faces the interior surface of the automobile, and its flow resistance value is less than 500 Nsm⁻³. The shape-retaining felt layer can maintain its molded shape, and its flow resistance value is less than 500 Nsm⁻³. The porous adhesive layer serves to adhere the air permeable design layer and the shape-retaining felt layer, and forms openings therein. Openings are formed halfway through the air permeable design layer and the shape-retaining felt layer, which are laminated on the porous adhesive layer, at the position facing the openings in the porous adhesive layer.

According to this arrangement, the air permeable design layer provides the decorative design required as interior trim material, and the shape-retaining felt layer can keep the interior trim installation material in the three-dimensional shape that matches the shape of a portion of the automobile where the molded interior trim installation material is installed. Further, since the air permeable design layer and the shape-retaining felt layer having high air permeability are laminated through the porous adhesive layer while maintaining air permeability between them, both the air permeable design layer and the shape-retaining felt layer can be efficiently used as sound absorption material. Also, the air permeable design layer and the shape-retaining felt layer, the flow resistance values of which are less than 500 Nsm⁻³, are excellent in lightweight and cushioning characteristics.

According to this arrangement, sound waves that have passed through the openings in the porous adhesive layer can easily reach the deep recesses of the air permeable design layer or the shape-retaining felt layer, and the energy of the sound waves can be absorbed effectively. Preferably, the halfway opening may be cone shaped in which the entrance side is broader than the deep side, thereby enabling sound waves, in particular, to be easily absorbed.

The flow resistance value of the laminate of the air permeable design layer, the porous adhesive layer, and the shape-retaining felt layer can be easily adjusted by adjusting the open area ratio of the porous adhesive layer. The flow resistance value of the laminate is preferably within 500 to 4000 Nsm⁻³, thereby resulting in a beneficial sound absorption and sound insulation effect.

Further, as the result of examinations by the inventors, it was found that the flow resistance value of the interior trim installation material is preferably varied from one portion to another of the interior of the automobile. Specifically, the flat molded portion along the flat portion, such as the floor of the automobile, is preferably set to a relatively high flow resistance value compared with the vertical wall molded portion along the side wall of the automobile. This arrangement is excellent in sound absorption compared with the case in which the whole of the interior trim installation material has an even flow resistance value.

The flow resistance value of the interior trim installation material can be easily adjusted for each portion by varying the open area ratio of the porous adhesive layer for each portion to the appropriate value, as described above. Also, even if the shape-retaining felt layer is omitted, for example, in the portion where not much capability for retaining the shape is needed, appropriate sound absorption and sound insulation in that portion can be obtained by adjusting the flow resistance of the porous adhesive layer of that portion by using the feature in which the flow resistance value, and therefore the sound absorption and sound insulation characteristics can be adjusted by adjusting the open area ratio of the porous adhesive layer. In this way, the interior trim installation material can be reduced in weight.

It was experimentally demonstrated that the flow resistance value of the porous adhesive layer is suitably set within 300 to 3500 Nsm⁻³. In order to form the adhesive layer with this air permeability, it was experimentally demonstrated that the diameter of each opening of the adhesive layer hole is suitably set within the range from 0.5 to 3 mm and the number of openings is suitably set within the range from 40 to 500/100 cm².

Preferably, the air permeable design layer and/or the shape-retaining felt layer may include split fabric that is formed by extruding different kinds of resin from the same base. According this arrangement, the fabric structure becomes fine so that the fiber is easy to vibrate, and the absorption characteristic of the sound energy is enhanced.

Preferably, in manufacturing the molded interior trim installation material, the porous adhesive layer is manufactured by forming openings in a thermoplastic resin film by using a heat needle. According to this manufacturing method, the flow resistance value of the porous adhesive layer can be easily adjusted by adjusting the opening density. Also, even if the opening density is changed, the weight per unit area of the interior trim installation material cannot be changed so that the change in sound absorption and sound insulation caused by the change in weight is prevented, and a preferable sound absorption and sound insulation characteristic can be easily obtained.

A thermoplastic resin film, which will be formed into an porous adhesive layer, is overlaid on one surface of the air permeable design layer or the shape-retaining felt layer, and then openings may be formed in one surface of the air permeable design layer or in one surface of the shape-retaining layer from the thermoplastic resin film side to the air permeable design layer or from the thermoplastic resin film side to the shape-retaining felt layer with a machine for forming an opening having many heat needle implanted in the periphery, thereby resulting in a preferable arrangement in which openings are formed in the air permeable design layer or in the shape-retaining felt layer at positions facing the openings in the porous adhesive layer as aforementioned.

### Brief Description of the Drawings

Fig. 1 is a cross-section view showing a conventional example of molded interior trim installation material for an automobile.
Fig. 2 is a cross-section view showing another conventional example of a molded interior trim installation material for an automobile.
Fig. 3 is a cross-section view of a molded interior trim installation material for an automobile according to an embodiment of the present invention taken along the lateral direction of the automobile.
Fig. 4 is a cross-section view of the molded interior trim installation material for an automobile shown in Fig. 1 taken along the longitudinal direction of the automobile.
Fig. 5 is an enlarged cross-section view of a flat molded portion in the molded interior trim installation material for an automobile in Fig. 1.
Fig. 6 is a graph showing one example showing variation in the amount of reduced noise in the interior of the automobile when the flow resistance value of the molded interior trim installation material for an automobile is varied.
Fig. 7 is a graph showing one example of flow resistance variation relative to the variation of the open area ratio in the porous adhesive layer.
Fig. 8 is a graph showing one example of flow resistance variation relative to the variation of diameters of the openings in the porous adhesive layer.
Fig. 9A is a view showing one example of a method of manufacturing the molded interior trim installation material for an automobile in Fig. 1.
Fig. 9B is a view showing another example of a method of manufacturing the molded interior trim installation material for an automobile in Fig. 1.
Fig. 10A is a cross-section view showing details of the openings formed by the manufacturing method in Fig. 9B.

### Best Mode for Carrying Out the Invention

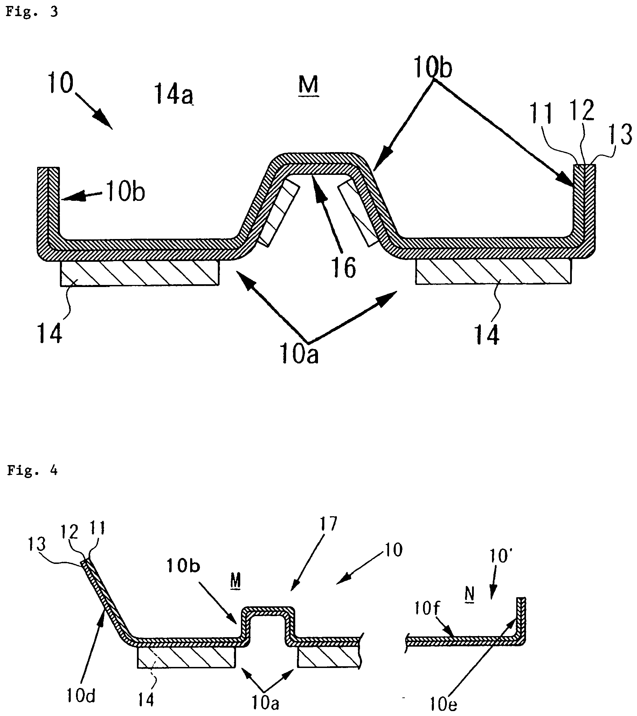

A floor panel (not shown) for an automobile typically includes an approximate flat portion and a portion that extends upwardly from the flat portion. Interior trim installation material 10 as a floor carpet in crew compartment M and interior trim installation material 10' for luggage compartment N, which are to be installed on the floor panel as molded interior trim installation materials for an automobile according to an embodiment of the present invention, include flat molded portions 10a that accommodate the approximate flat portion of the floor panel and vertical wall molded portions 10b that accommodate portions extending upwardly from the flat portions, as shown in Figs. 3 and 4.

Figures 3 and 4 show examples of materials to be installed in a passenger automobile. In this case, interior trim installation material 10 has vertical wall molded portions 10b along the door walls at the right and left sides, as shown in Fig. 3, when the cross section is viewed along the lateral direction. Interior trim installation material 10 protrude at the center in the lateral direction to accommodate tunnel portion 16 in which the floor protrudes to allow a propeller shaft for the automobile to pass through under tunnel portion 16, and thereby vertical wall molded portions 10b are formed. Flat molded portions 10a for the footings of the left and right passengers are formed between tunnel portion 16 and vertical wall molded portions 10b that correspond to the left and right door walls.

As shown in Fig. 4, when viewed in the longitudinal direction, the front portion of interior trim installation material 10 forms front vehicle vertical wall molded portion 10d along a partition wall against the engine compartment, and flat molded portion 10a follows front vehicle vertical wall molded portion 10d and is located at the footwell in the front seat. A portion between flat molded portion 10a for the footwell in the front seat and flat molded portion 10a for the footwell in the front seat protrudes to accommodate the structure for vehicle reinforcement, called cross member portion 17, and thereby vertical wall molded portion 10b is formed.

Luggage compartment N is located at the rear of the automobile, and interior trim installation material 10' that is installed therein has luggage compartment flat molded portion 10f, on which luggage is placed, and luggage compartment vertical wall molded portion 10e.

These interior trim installation materials 10, 10' are previously formed into a shape that matches the abovementioned floor shape, and then are installed. Therefore, predetermined moldability and capability for retaining the shape are required for interior trim installation materials.

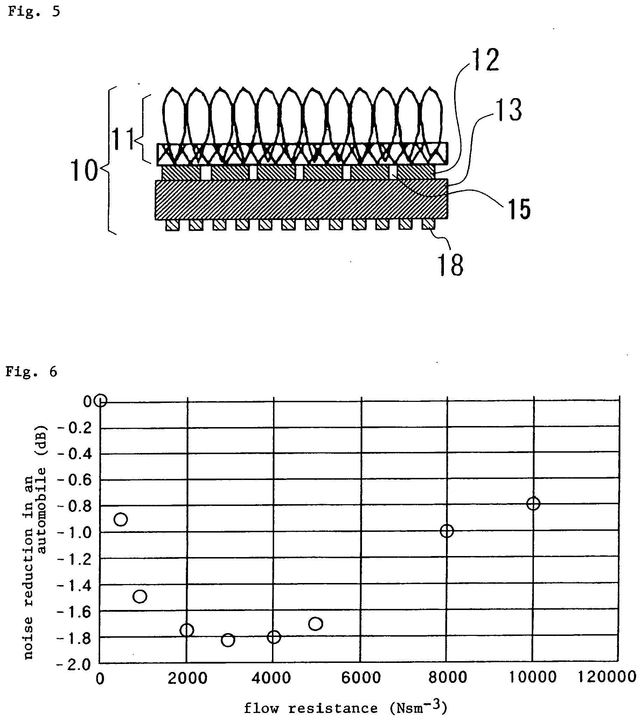

Next, explanations are given of the layer structure of the interior trim installation material for an automobile of the present embodiment with reference to Fig. 5. Figure 5 is an enlarged cross-section view showing a part of flat molded portion 10a of interior trim installation material 10. Next explanation is made taking this portion as an example, and vertical wall molded portion 10b of interior trim installation material 10 and any portion of interior trim installation material 10' for luggage compartment N may have the same layer structure.

Interior trim installation material 10 is formed by laminating at least air permeable design layer 11, porous adhesive layer 12, and shape-retaining felt layer 13, which are arranged sequentially from the side facing the interior of the automobile to the panel at the installing position.

Among elements of molded installation material 10, air permeable design layer 11 arranged to face the interior surface of the automobile is a layer that assures the decorative design, the touch, the wear resistance, and the like of interior trim installation material 10. Suitably, air permeable design layer 11 may be formed of needlepunched nonwoven fabric that is made by applying the needling process to nonwoven web to make the surface fluffy. In addition to the needlepunched nonwoven fabric, an air permeable fiber sheet and a porous sheet, such as a tuft carpet, may be used as air permeable design layer 11.

Porous adhesive layer 12 is a layer for adhering air permeable design layer 11 and shape-retaining felt layer 13. Openings 15 are formed in porous adhesive layer 12 in order to ensure high air permeability between air permeable design layer 11 and shape-retaining felt layer 13. A film of thermoplastic resin (such as polyethylene resin, polypropylene resin, modified polyester resin) that has a low melting point (100 to 300 °C) and that is formed with many minute openings 15, is suitable for porous adhesive layer 12.

Shape-retaining felt layer 13 serves to retain the shape of interior trim installation material 10 and possesses higher stiffness than air permeable design layer 11. Basically, shape-retaining felt layer 13 is shaped into a predetermined shape during molding, thereby resulting in interior trim installation material 10 having a corresponding molded shape.

Shape-retaining felt layer 13 is required to have predetermined moldability and shape-retaining ability after molding, and synthetic fiber felt including the thermoplastic resin fiber having a low melting point (100 to 200°C) at a predetermined rate (5 to 30wt%) may be mentioned as raw material suitable for shape-retaining felt layer 13. This synthetic fiber felt, after the low melting point thermoplastic resin fabric is softened by heating, is molded by a press molding die that accommodates a required molding shape and is cooled, thereby the synthetic fiber felt can be shaped into a predetermined molded shape, and can retain the shape.

Preferably, shape-retaining felt layer 13 possesses stiffness that enables, in particular, vertical wall molded portion 10b of molded interior trim installation material 10 to retain the predetermined shape without support. To this end, shape-retaining felt layer 13 preferably has a thickness of 2 to 5 mm and a density of 50 to 300 kg/m³. By giving sufficient stiffness to shape-retaining felt layer 13, in this way, vertical wall molded portion 10b can retain the shape that fits the panel at the installing position without causing deformation that will cause the portion to sag.

In this laminate, preferably, air permeable design layer 11 and shape-retaining felt layer 13 provide low flow resistance values. According to this, noise at the interior side, which is generated as the automobile travels, can be absorbed through air permeable design layer 11, and sound waves in a direction from the panel of the automobile (a direction from vehicle exterior) can be absorbed through shape-retaining felt layer 13 into interior trim installation material effectively, and the energy of the absorbed sound waves can be attenuated in interior trim installation material 10. For this purpose, preferably, the flow resistance values of air permeable design layer 11 and shape-retaining felt layer 13 is, in particular, less than 500Nsm⁻³ (ISO 9053: Acoustics-Materials FOR acoustical applications-Determination of airflow resistance).

The flow resistance value of air permeable design layer 11 can be adjusted, for example, by changing the fiber length, fiber diameter, or the needling degree of fiber that forms an unwoven web.

On the other hand, preferably, the entire flow resistance value of the laminate of air permeable design layer 11, porous adhesive layer 12, and shape-retaining felt layer is adjusted to an appropriate range so that the noise reduction effect in the automobile can be achieved effectively by the sound absorption and sound insulation effect of the laminate. Figure 6 shows the reduced amount of vehicle interior noise when interior trim installation materials of various flow resistance values are installed in an automobile of a specific vehicle type. As is clear from Fig. 6, in this automobile, when the flow resistance of the interior trim installation material is set within 2000 to 4000Nsm⁻³, a large noise reduction effect can be obtained. The relationship between the amount of noise reduction in the automobile and the flow resistance of the interior trim installation material changes depending on vehicle types. According to the study of the inventors, it was experimentally found that the flow resistance of interior trim installation material 10, *i.e.,* the flow resistance of the laminate of air permeable design layer 11, porous adhesive layer 12, and shape-retaining felt layer 13 is preferably set to 500 to 4000Nsm⁻³ in order to achieve an effective noise reduction effect in the interior of the automobile for various vehicle types.

The flow resistance value of the laminate of air permeable design layer 11, porous adhesive layer 12, and shape-retaining felt layer 13 is approximately equal to the sum of the flow resistance value of each layer, and, in interior trim installation material 10, according to the present embodiment, the flow resistance value of the laminate can be adjusted within the above-mentioned preferable range by controlling the flow resistance value of porous adhesive layer 12. Specifically, the flow resistance value of porous adhesive layer 12 can be easily adjusted by varying the diameter of openings 15, the number of openings 15 per unit area, or the like to adjust an open area ratio. On the other hand, the flow resistance values of air permeable design layer 11 and shape-retaining felt layer 13 can be adjusted to some extent by varying the fiber density thereof or the diameter of the used fiber, however, it is more difficult to adjust the flow resistance values than porous adhesive layer 12 and the adjustable range is limited. Also, it can be considered that air permeable design layer 11 and shape-retaining felt layer 13 are multi-layered, however, cost and weight are increased

When the air permeability of porous adhesive layer 12 is too small, the flow resistance value of the laminate of air permeable design layer 11, porous adhesive layer 12, and shape-retaining felt layer 13 is too large and it is difficult to control the flow resistance value within a required range, as described above. On the other hand, when the air permeability of porous adhesive layer 12 is too large, the flow resistance value of entire interior trim installation material 10 is too small and it is difficult to control the flow resistance value within a required range, as described above, and the adhesive strength is undesirably lowered. It was experimentally validated that the flow resistance value of porous adhesive layer 12 is preferably within a range from 300 to 3500Nsm⁻³.

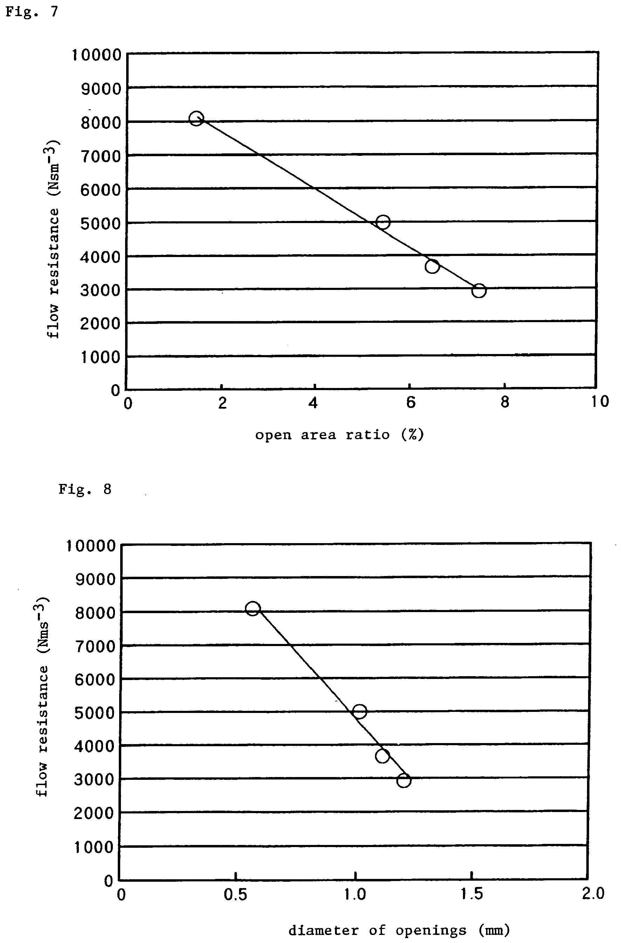

Figures 7 and 8 are graphs showing variations in the flow resistance of porous adhesive layer 12 when the open area ratio and the diameter of openings 15 are varied, respectively. According to these results of the study, it was found that the diameter of each opening is preferably set to a range from 0.5 to 3.0 mm and the number of openings is preferably set to a range from 40 to 500 /100 cm², thereby porous adhesive layer 12 can be easily controlled to ensure that the flow resistance value is in a range from 300 to 3500 Nsm⁻³, as described above. Also, it was validated that porous adhesive layer 12 can ensure sufficient adhesive strength not less than 7 N / 25 mm width, when the diameter and number of openings 15 are set to the above-mentioned ranges.

Also, according to the result of the study by the inventors, it was found that acoustic characteristics vary depending on portions of a (floor) panel of the automobile, and the flow resistance value of the interior trim installation material is preferably varied depending on portions. This was validated by performing an analysis to analyze the contribution of each panel portion to noise reduction in the interior of the automobile when simulating the state in which an automobile is driven. Though differences exist according to specific vehicle panel shapes, generally, in many automobiles, as regards the flow resistance value of interior trim installation material 10, preferably, the flow resistance value of vertical wall molded portion 10b is relatively smaller than that of flat molded portion 10a, and in particular, the flow resistance of vehicle front vertical wall molded portion 10d is relatively smaller than that of flat molded portion 10a. Further, in interior trim installation material 10' that is installed in luggage compartment N, the simulation and the experiment validated that the flow resistance value of luggage compartment vertical wall molded portion 10e is preferably smaller than that in crew compartment flat molded portion 10a in many cases.

In interior trim installation materials 10, 10' according to the present embodiment, portion-by-portion adjustment of the flow resistance value can be easily performed. Specifically, interior trim installation materials 10, 10' that has various flow resistance value depending on various portions is easily obtained by varying the diameter and the number of openings 15 from one portion to another, for example, by varying the diameter and the number of openings 15 between flat molded portion 10a and vertical wall molded portion 10b, in porous adhesive layer 12.

Incidentally, as shown in Figs. 3 and 4, in molded interior trim installation material 10, bulk-increasing material 14 or a cushion material may be additionally arranged in a part between shape-retaining felt layer 13 and the automobile interior panel on which molded interior trim installation material 10 is installed. Bulk-increasing material 14 or the cushion material is partially arranged according to the requirement of an automobile's design. Suitably, these are laminated by using a slight amount of low melting point thermoplastic resin powders or low melting point thermoplastic resin fibers as adhesive 18 so as not to inhibit the air permeability of shape-retaining felt layer 13. Also, a portion at which the capability for retaining the shape is required to be largely enhanced may be provided with additional second shape-retaining layer 14a on the rear side of shape-retaining layer 13.

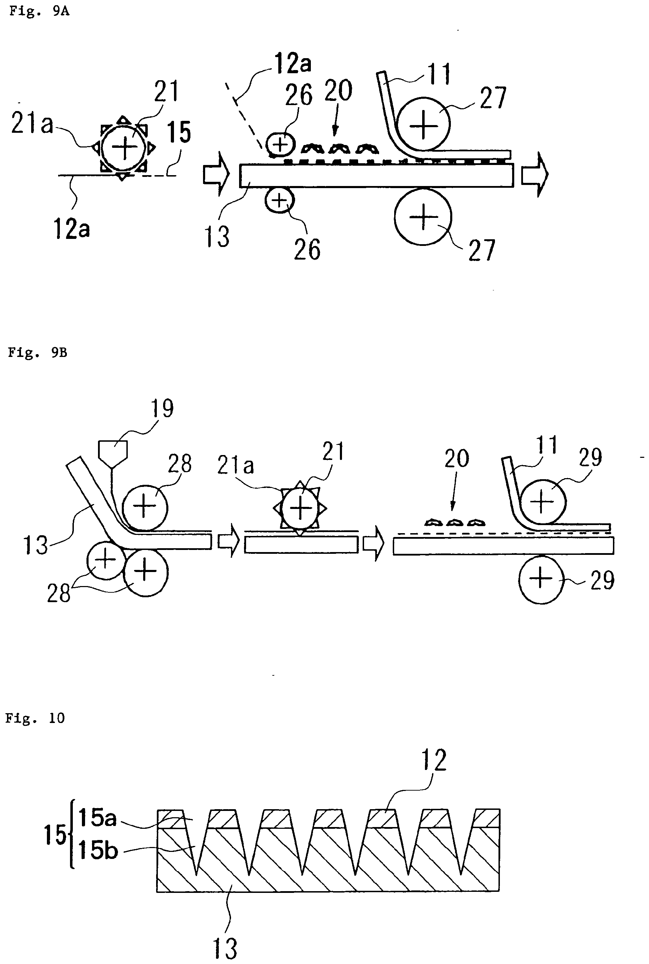

Next, two kinds of methods for laminating each layer to form interior trim installation materials 10, 10' according to the present embodiment are shown with reference to Figs. 9A and 9B. Fig. 9A is an embodiment which does not form part of the invention but represents background art useful for understanding the invention.

Manufacturing method in Fig.9A, which is not part of the invention:
Previously, a required number of openings with predetermined diameters are formed in thermoplastic resin film 12a, which will be formed into porous adhesive layer 12, by means of a machine for forming an opening. The machine for forming an opening has long drum 21 that is implanted with heat needles 21a (the desirable diameter is from 2.0 to 3.0 mm, the length is from 4.0 to 6.0 mm, and the temperature is from 90 to 250°C) on the circumference to be distributed in predetermined density and that is rotationally driven. In the formation of openings 15, preferably, producing burrs around openings 15, or closing or reducing their size, during the adhered process, can be avoided by using a heat needle, not an ambient temperature needle, and a set diameter and a number of openings 15 can be obtained with reliability.

The diameter and number of openings 15 that are formed in thermoplastic resin film 12a can be controlled by the diameter and the distribution density of implanted heat needles 21a. When the diameter and the number of openings 15 are changed in order to set the flow resistance of the interior trim installation material for various values according to vehicle types or the like, a plurality of drums 21 that are suitable for each case may be prepared for use as replacements. Also, when there is a need to change the hole-open area ratio depending on various locations when molded interior trim installation material 10 being installed, the diameter and the number of formed openings 15 may be changed depending on the location of various portions in thermoplastic resin film 12a by changing the implantation density of heat needles 21a or diameters of heat needles 21a along the width direction of drum 21.

In a further advanced example, the machine for forming an opening may be provided with a plurality of drums in which distributions of heat needles are different from each other. In this case, the machine for forming an opening is provided with the required number of drums, the drum to be used is automatically selected in response to a required open area ratio, thereby efficient manufacturing of interior trim installation materials that accommodate various vehicle types can be achieved.

The number of openings 15 may be adjusted by providing an arrangement in which each heat needle 21a can be advanced and withdrawn. The density of openings 15 can also be controlled by adjusting the ratio of the number of revolutions of drum 21 and the feeding speed of thermoplastic resin film 12a.

The diameter of opening 15 can be adjusted by using tapered heat needle 21a and by changing the insertion depth of heat needle 21a at which heat needle 21a is inserted into thermoplastic resin film 12a. The diameter of opening 15 can also be adjusted by changing the feeding speed of thermoplastic 12a to vary the contact time of heat needle 21a with thermoplastic resin film 12a. That is, when the contact time of heat needle 21a is lengthened, the level of the heating of thermoplastic resin film 12a is increased, and thereby the diameter of opening 15 can be made larger.

The size of opening 15 in porous adhesive layer 12 after being laminated tends to become smaller as the compression ratio during molding becomes higher because the periphery of opening 15 is crushed. By using this tendency, the diameter of opening 15 can be adjusted by varying the compression ratio during molding. As described above, preferably, the laminate is arranged so that the flow resistance value of vertical wall molded portion 10b is relatively smaller than that of flat molded portion 10a in many cases. So, in a case in which the aperture of vertical wall molded portion 10b is larger than that of flat molded portion 10a when the laminate is molded into a shape that matches the shape of a portion of the automobile where interior trim installation material 10 is installed, even if the laminate has an uniform open area ratio, openings 15 in porous adhesive layer 12 are elongated during molding, and the flow resistance value can be made smaller precisely at vertical wall molded portion 10b in some cases.

Successively, while shape-retaining felt layer 13 is fed by roller 26, thermoplastic resin film 12a formed with openings 15 (raw material of porous adhesive layer 12) is conveyed together with shape-retaining felt layer 13 so as to be overlaid on the upper surface thereof. Then, thermoplastic resin film 12a that is overlaid on the upper surface of shape-retaining felt layer 13 is heated by heater 20, air permeable design layer 11 is further overlaid on the upper surface of thermoplastic resin film 12a that is slightly softened, and these layers are tightened together by roller 27 and are slightly pressed. According to these operations, the laminate is manufactured.

Manufacturing method in Fig. 9B:
While shape-retaining felt layer 14 is fed by roller 28, low melting point thermoplastic resin that is a raw material of porous adhesive layer 12 is extruded from T die 19 in a film-like formation on the upper surface of shape-retaining felt layer 14, and then is pressed by roller 28 to laminate these two layers. Then, a predetermined number of openings 15 having the required diameter are formed by the machine for forming an opening having long drum 21 in which many heat needles 21a are implanted on the circumference.

According to this manufacturing method, also, the density of openings 15 can be adjusted by the same technique as Fig. 9A, such as by adjusting the ratio of the number of revolutions of drum 21 and the feeding speed of thermoplastic resin film 12a. Also, the density of openings 15 can be varied along the width direction of thermoplastic resin film 12a by techniques such as varying the implantation density of heat needles 21a or the diameter of heat needle 21a along the width direction of drum 21. In this way, porous adhesive layer 12 can be designed to have suitable hole-open area ratios depending on vehicle types, locations, or the like, when being installed as an interior trim material for an automobile.

Subsequently, thermoplastic resin film 12a is slightly molten by heating again, and then air permeable design layer 11 is overlaid and is pressed by roller 29, thereby a three-layered laminate is obtained.

The above-mentioned manufacturing method in Fig. 9B has an advantage in that openings 15b can be formed halfway through shape-retaining felt layer concurrently with forming openings 15a in thermoplastic resin film 12a (porous adhesive layer 12). That is, when openings 15a are formed in thermoplastic resin film 12a (porous adhesive layer 12), the projection length of heat needle 21a is set longer, whereby the tip of heat needle 21a penetrates thermoplastic resin film 12a to reach shape-retaining felt layer 13 and openings 15b are formed halfway through shape-retaining felt layer 13. Therefore, openings 15b are formed in shape-retaining felt layer 13 at positions that precisely face openings 15a in porous adhesive layer 12.

When openings 15 are formed in this way, the sound waves passing through openings 15a in porous adhesive layer 12 can easily penetrate the deep recesses by virtue of openings 15b in shape-retaining felt layer 13 resulting in enhanced sound absorption capability. Also, when openings 15b are formed halfway through shape-retaining felt layer 13, shape-retaining felt layer 13 is easy to install during molding and is easily to be excellently molded without causing any creases.

In this case, preferably, opening 15 is formed in a cone shape in which the entrance side is broader and the inner side is relatively narrow, as shown in Fig. 10. According to this arrangement, lowering the capability for retaining the shape of shape-retaining felt layer 13 can be minimized, while sound absorption can be enhanced. Opening 15 having such a shape can be formed by using heat needle 21a having a tip which is somewhat gradually broadened from the tip side toward the basal side.

Incidentally, according to the manufacturing method in Fig. 9B, firstly, thermoplastic resin film 12a may be overlaid on air permeable design layer 11 and then openings may be formed halfway through air permeable design layer 11 concurrently with forming openings 15 in thermoplastic resin film 12a (porous adhesive layer 12). According to this, the sound waves can easily penetrate the deep recesses of air permeable design layer 11 resulting in enhanced sound absorption capability. Further, according to the manufacturing methods in Figs. 9A and 9B, thermoplastic resin sheet 12a may be prefabricated as a web sheet instead of being extruded in a film-like (sheet-like) formation.

Also, the manufacturing methods in Figs. 9A and 9B have the advantage that the flow resistance can be adjusted without changing the weight per unit area of the laminate. That is, in the adhesive layer made of thermoplastic resin powder as described in Japanese Patent Laid-Open. No. 2002-219989, in order to change the flow resistance value, the density of powder should be changed, and thus the weight per unit area in the adhesive layer is largely changed. Such a large change in the weight of the floor mat has an effect on the sound absorption and sound insulation performance so that, even if the flow resistance can be controlled to a predetermined value, there is a possibility that satisfactory sound absorption and sound insulation performance cannot be obtained.

On the other hand, in the manufacturing methods in Figs. 9A and 9B, since openings 15 are formed in thermoplastic resin sheet 12a by using heat needle 21a, there is little possibility that the weight per unit area in thermoplastic resin sheet 12a will be changed when openings 15 are formed. Therefore, according to these manufacturing methods, it is easy to adjust the design requirement for manufacturing the molded interior trim installation material for an automobile that will have excellent sound absorption and sound insulation performance.

Also, preferably, split fibers are mixed into air permeable design layer 11 and/or shape-retaining felt layer 13 of interior trim installation material 10 in a ratio of 10 to 50 wt%. According to this arrangement, it was validated that the normal incidence sound absorption coefficient is improved by 5 to 15% in the range of 1k to 5kHz. The split fiber is a fiber that is formed by extruding different types of resins from the same base, and the split fiber includes the core-in-sheath type, the side-by-side type, and the multi-split type, which have different resin arrangements. The split fiber takes the form of a fiber having a thinner split tip after peeling at a weak junction portion between different resins during fiber-processing such as carding or needling, and thereby provides excellent sound absorption capability.

In order to manufacture a layer that includes a split fiber, for example, split fibers are previously mixed into a main material fiber, and the mixed material is carded to form a web. Thereafter, the thickness of the web and the interweaving formation of the fiber are adjusted by the needle punch, and a predetermined thickness is obtained by a press roll.

## Claims

1. A molded interior trim installation material for an automobile, comprising:
an air permeable design layer that faces an interior surface of the automobile and that has a flow resistance value of less than 500 Nsm⁻³;
a shape-retaining felt layer that can maintain its molded shape and that has a flow resistance value of less than 500 Nsm⁻³; and
a porous adhesive layer that serves to adhere said air permeable design layer and said shape-retaining felt layer and that forms openings therein;
wherein openings are formed halfway through said air permeable design layer or said shape-retaining felt layer at positions that face said openings in said porous adhesive layer.

2. The molded interior trim installation material for an automobile according to Claim 1, wherein a flow resistance value of a laminate of said air permeable design layer, said shape-retaining felt layer, and said porous adhesive layer are within a range from 500 to 4000 Nsm⁻³.

3. The molded interior trim installation material for an automobile according to Claim 1 or 2, comprising:
a flat molded portion that extends along a flat portion of the interior surface of the automobile; and
a vertical wall molded portion that extends upwardly from said flat molded portion:
wherein a flow resistance value of a laminate of said air permeable design layer, said shape-retaining felt layer, and said porous adhesive layer in said vertical wall molded portion are relatively smaller than that in said flat molded portion.

4. The molded interior trim installation material for an automobile according to any one of Claims 1 to 3, comprising:
a flat molded portion that extends along a flat portion of the interior surface of the automobile; and
a vertical wall molded portion that extends upwardly from said flat molded portion:
wherein a flow resistance value of a laminate of said air permeable design layer, said shape-retaining felt layer, and said porous adhesive layer in said vertical wall molded portion at a front side of the automobile are relatively smaller than that in said flat molded portion.

5. The molded interior trim installation material for an automobile according to any one of Claims 1 to 4, further comprising:
a flat molded portion that extends along a flat portion of the interior of the automobile; and
a vertical wall molded portion that extends upwardly from said flat molded portion:
wherein a flow resistance value of a laminate of said air permeable design layer, said shape-retaining felt layer, and said porous adhesive layer in said vertical wall molded portion of a luggage compartment of the automobile are relatively smaller than that in said flat molded portion.

6. The molded interior trim installation material for an automobile according to any one of Claims 1 to 5, wherein a flow resistance value of said porous adhesive layer is within a range from 300 to 3500 Nsm⁻³.

7. The molded interior trim installation material for an automobile according to any one of Claims 1 to 6, wherein a diameter of each of said openings in said porous adhesive layer is in a range from 0.5 to 3.0 mm, and the number of said openings is in a range from 40 to 500/100cm².

8. The molded interior trim installation material for an automobile according to Claim 1, wherein said opening formed halfway through said air permeable design layer or said shape-retaining felt layer is shaped into a cone that is relatively broad at an entrance side and relatively narrow at a deep side.

9. The molded interior trim installation material for an automobile according to any one of Claims 1 to 8, wherein a spit fiber formed by extruding different kinds of resins from the same base is included in said air permeable design layer and/or said shape-retaining felt layer.

10. A method of manufacturing a molded interior trim installation material for an automobile, comprising the steps of:
forming an air permeable design layer that faces an interior surface of the automobile and that has a flow resistance value of less than 500 Nsm⁻³;
forming a shape-retaining felt layer that can maintain its molded shape and that has a flow resistance value of less than 500 Nsm⁻³;
forming openings in a thermoplastic resin film by using a heat needle;
laminating said air permeable design layer and said shape-retaining felt layer through said thermoplastic resin film that is formed with said openings and that is heated and molten; and
thermally forming a laminate of said air permeable design layer, said thermoplastic resin film, and said shape-retaining felt layer to provide a three-dimensional shape that matches a shape of a portion of the automobile where the molded interior trim installation material is installed,
wherein, while said thermoplastic resin film is overlaid on one surface of said air permeable design layer or said shape-retaining felt layer, by using a machine for forming an opening with many heat needles implanted on a circumference, said openings are formed from said thermoplastic resin film side to said air permeable design layer side or from said thermoplastic resin film side to said shape-retaining felt layer side so as to pass through said thermoplastic resin film and so as to pass halfway through said air permeable design layer or said shape-retaining felt layer.

## Patentansprüche

1. Geformtes Innenverkleidungsinstallationsmaterial für ein Automobil, umfassend:
eine luftdurchlässige Designschicht, die einer Innenoberfläche des Automobils zugewandt ist und die einen Fließwiderstandswert von weniger als 500 Nsm⁻³ aufweist;
eine formbeständige Filzschicht, die ihre geformte Form bewahren kann und einen Fließwiderstandswert von weniger als 500 Nsm⁻³ aufweist; und
eine poröse Haftschicht, die zum Anheften der luftdurchlässigen Designschicht und der formbeständigen Filzschicht dient und die Öffnungen darin bildet;
wobei Öffnungen auf halbem Weg durch die luftdurchlässige Designschicht oder die formbeständige Filzschicht an Positionen gebildet sind, die den Öffnungen in der porösen Haftschicht zugewandt sind.

2. Geformtes Innenverkleidungsinstallationsmaterial für ein Automobil gemäß Anspruch 1, wobei ein Fließwiderstandswert eines Laminats der luftdurchlässigen Designschicht, der formbeständigen Filzschicht und der porösen Haftschicht in einem Bereich von 500 bis 4000 Nsm⁻³ liegt.

3. Geformtes Innenverkleidungsinstallationsmaterial für ein Automobil gemäß Anspruch 1 oder 2, umfassend:
einen geformten flachen Teil, der entlang eines flachen Teils der Innenoberfläche des Automobils verläuft; und
einen geformten senkrechten Wandteil, der von dem geformten flachen Teil nach oben verläuft;
wobei ein Fließwiderstandswert eines Laminats der luftdurchlässigen Designschicht, der formbeständigen Filzschicht und der porösen Haftschicht in dem geformten senkrechten Wandteil vergleichsweise kleiner als in dem geformten flachen Teil ist.

4. Geformtes Innenverkleidungsinstallationsmaterial für ein Automobil gemäß einem der Ansprüche 1 bis 3, umfassend:
einen geformten flachen Teil, der entlang eines flachen Teils der Innenoberfläche des Automobils verläuft; und
einen geformten senkrechten Wandteil, der von dem geformten flachen Teil nach oben verläuft;
wobei ein Fließwiderstandswert eines Laminats der luftdurchlässigen Designschicht, der formbeständigen Filzschicht und der porösen Haftschicht in dem geformten senkrechten Wandteil an einer Vorderseite des Automobils vergleichsweise kleiner als in dem geformten flachen Teil ist.

5. Geformtes Innenverkleidungsinstallationsmaterial für ein Automobil gemäß einem der Ansprüche 1 bis 4, ferner umfassend:
einen geformten flachen Teil, der entlang eines flachen Teils des Innenraums des Automobils verläuft; und
einen geformten senkrechten Wandteil, der von dem geformten flachen Teil nach oben verläuft;
wobei ein Fließwiderstandswert eines Laminats der luftdurchlässigen Designschicht, der formbeständigen Filzschicht und der porösen Haftschicht in dem geformten senkrechten Wandteil eines Gepäckraums des Automobils vergleichsweise kleiner als in dem geformten flachen Teil ist.

6. Geformtes Innenverkleidungsinstallationsmaterial für ein Automobil gemäß einem der Ansprüche 1 bis 5, wobei ein Fließwiderstandswert der porösen Haftschicht in einem Bereich von 300 bis 3500 Nsm⁻³ liegt.

7. Geformtes Innenverkleidungsinstallationsmaterial für ein Automobil gemäß einem der Ansprüche 1 bis 6, wobei ein Durchmesser jeder der Öffnungen in der porösen Haftschicht in einem Bereich von 0,5 bis 3,0 mm liegt und die Anzahl der Öffnungen in einem Bereich von 40 bis 500/100 cm² liegt.

8. Geformtes Innenverkleidungsinstallationsmaterial für ein Automobil gemäß Anspruch 1, wobei die Öffnung, die auf halbem Weg durch die luftdurchlässige Designschicht oder die formbeständige Filzschicht gebildet ist, als Kegel gestaltet ist, der an einer Eingangsseite vergleichsweise breit und an einer tiefen Seite vergleichsweise schmal ist.

9. Geformtes Innenverkleidungsinstallationsmaterial für ein Automobil gemäß einem der Ansprüche 1 bis 8, wobei in der luftdurchlässigen Designschicht und/oder der formbeständigen Filzschicht eine Spießfaser enthalten ist, die durch Extrudieren verschiedener Arten von Harzen aus der gleichen Basis gebildet ist.

10. Verfahren zum Herstellen eines geformten Innenverkleidungsinstallationsmaterials für ein Automobil, umfassend die Schritte:
Bilden einer luftdurchlässigen Designschicht, die einer Innenoberfläche des Automobils zugewandt ist und die einen Fließwiderstandswert von weniger als 500 Nsm⁻³ aufweist;
Bilden einer formbeständigen Filzschicht, die ihre geformte Form bewahren kann und einen Fließwiderstandswert von weniger als 500 Nsm⁻³ aufweist;
Bilden von Öffnungen in einem thermoplastischen Harzfilm unter Verwendung einer Heißnadel;
Laminieren der luftdurchlässigen Designschicht und der formbeständigen Filzschicht durch den thermoplastischen Harzfilm, der mit den Öffnungen gebildet ist und der erhitzt und geschmolzen wird; und
Thermisches Formen eines Laminats der luftdurchlässigen Designschicht, des thermoplastischen Harzfilms und der formbeständigen Filzschicht, um eine dreidimensionale Form zu erhalten, die der Form eines Teils des Automobils entspricht, in dem das geformte Innenverkleidungsinstallationsmaterial eingebaut ist,
wobei, während der thermoplastische Harzfilm auf eine Oberfläche der luftdurchlässigen Designschicht oder der formbeständigen Filzschicht gelegt wird, mithilfe einer Maschine zum Bilden einer Öffnung mit vielen Heißnadeln, die an einem Umfang eingesetzt sind, die Öffnungen von der Seite des thermoplastischen Harzfilms zu der Seite der luftdurchlässigen Designschicht oder von der Seite des thermoplastischen Harzfilms zu der Seite der formbeständigen Harzschicht gebildet werden, um durch den thermoplastischen Harzfilm hindurchzugehen und um einen halben Weg durch die luftdurchlässige Designschicht oder die formbeständige Filzschicht hindurchzugehen.

## Revendications

1. Matériau d'installation de moulure intérieure moulé pour une automobile, comprenant :
une couche de conception perméable à l'air qui fait face à une surface intérieure de l'automobile et qui présente une valeur de résistance à l'écoulement de moins de 500 Nsm⁻³ ;
une couche de feutre à retenue de forme qui peut maintenir sa forme moulée et qui présente une valeur de résistance à l'écoulement de moins de 500 Nsm⁻³ ; et
une couche adhésive poreuse qui sert à faire adhérer ladite couche de conception perméable à l'air et ladite couche de feutre à retenue de forme et qui y forme des ouvertures ;
dans lequel des ouvertures sont formées à mi-chemin à travers ladite couche de conception perméable à l'air ou ladite couche de feutre à retenue de forme dans des positions qui font face auxdites ouvertures dans ladite couche adhésive poreuse.

2. Matériau d'installation de moulure intérieure moulé pour une automobile selon la revendication 1, dans lequel une valeur de résistance à l'écoulement d'un stratifié de ladite couche de conception perméable à l'air, de ladite couche de feutre à retenue de forme et de ladite couche adhésive poreuse est dans une plage de 500 à 4000 Nsm⁻³.

3. Matériau d'installation de moulure intérieure moulé pour une automobile selon la revendication 1 ou 2, comprenant en outre :
une portion moulée plate qui s'étend le long d'une portion plate de la surface intérieure de l'automobile ; et
une portion moulée de paroi verticale qui s'étend vers le haut depuis ladite portion moulée plate :
dans lequel une valeur de résistance à l'écoulement d'un stratifié de ladite couche de conception perméable à l'air, de ladite couche de feutre à retenue de forme et de ladite couche adhésive poreuse dans ladite portion moulée de paroi verticale est relativement inférieure à celle dans ladite portion moulée plate.

4. Matériau d'installation de moulure intérieure moulé pour une automobile selon l'une quelconque des revendications 1 à 3, comprenant :
une portion moulée plate qui s'étend le long d'une portion plate de la surface intérieure de l'automobile ; et
une portion moulée de paroi verticale qui s'étend vers le haut depuis ladite portion moulée plate :
dans lequel une valeur de résistance à l'écoulement d'un stratifié de ladite couche de conception perméable à l'air, de ladite couche de feutre à retenue de forme et de ladite couche adhésive poreuse dans ladite portion moulée de paroi verticale au niveau d'un côté avant de l'automobile est relativement inférieure à celle dans ladite portion moulée plate.

5. Matériau d'installation de moulure intérieure moulé pour une automobile selon l'une quelconque des revendications 1 à 4, comprenant en outre :
une portion moulée plate qui s'étend le long d'une portion plate de la surface intérieure de l'automobile ; et
une portion moulée de paroi verticale qui s'étend vers le haut depuis ladite portion moulée plate :
dans lequel une valeur de résistance à l'écoulement d'un stratifié de ladite couche de conception perméable à l'air, de ladite couche de feutre à retenue de forme et de ladite couche adhésive poreuse dans ladite portion moulée de paroi verticale d'un coffre de l'automobile est relativement inférieure à celle dans ladite portion moulée plate.

6. Matériau d'installation de moulure intérieure moulé pour une automobile selon l'une quelconque des revendications 1 à 5, dans lequel une valeur de résistance à l'écoulement de ladite couche adhésive poreuse est dans une plage de 300 à 3500 Nsm⁻³.

7. Matériau d'installation de moulure intérieure moulé pour une automobile selon l'une quelconque des revendications 1 à 6, dans lequel un diamètre de chacune desdites ouvertures dans ladite couche adhésive poreuse est dans une plage de 0,5 à 3,0 mm, et le nombre desdites ouvertures est dans une plage de 40 à 500/100 cm².

8. Matériau d'installation de moulure intérieure moulé pour une automobile selon la revendication 1, dans lequel ladite ouverture formée à mi-chemin à travers ladite couche de conception perméable à l'air ou ladite couche de feutre à retenue de forme est façonnée en un cône qui est relativement large au niveau d'un côté entrée et relativement étroit au niveau d'un côté profond.

9. Matériau d'installation de moulure intérieure moulé pour une automobile selon l'une quelconque des revendications 1 à 8, dans lequel une fibre fendue formée par l'extrusion de différentes sortes de résines à partir de la même base est incluse dans ladite couche de conception perméable à l'air et/ou ladite couche de feutre à retenue de forme.

10. Procédé de fabrication d'un matériau d'installation de moulure intérieure moulé pour une automobile, comprenant les étapes de :
formation d'une couche de conception perméable à l'air qui fait face à une surface intérieure de l'automobile et qui présente une valeur de résistance à l'écoulement de moins de 500 Nsm⁻³ ;
formation d'une couche de feutre à retenue de forme qui peut maintenir sa forme moulée et qui présente une valeur de résistance à l'écoulement de moins de 500 Nsm⁻³ ;
formation d'ouvertures dans un film de résine thermoplastique en utilisant une aiguille chauffante ;
stratification de ladite couche de conception perméable à l'air et de ladite couche de feutre à retenue de forme à travers ledit film de résine thermoplastique qui est formé avec lesdites ouvertes et qui est chauffé et fondu ; et
la formation thermique d'un stratifié de ladite couche de conception perméable à l'air, dudit film de résine thermoplastique et de ladite couche de feutre à retenue de forme pour fournir une forme tridimensionnelle qui correspond à une forme d'une portion de l'automobile où le matériau d'installation de moulure intérieure moulé est installé, dans lequel, alors que ledit film de résine thermoplastique recouvre une surface de ladite couche de conception perméable à l'air ou de ladite couche de feutre à retenue de forme, à l'aide d'une machine destinée à former une ouverture avec de nombreuses aiguilles chauffantes implantées sur une circonférence, lesdites ouvertures sont formées à partir dudit côté film de résine thermoplastique vers ledit côté couche de conception perméable à l'air ou à partir dudit côté film de résine thermoplastique vers ledit côté couche de feutre à retenue de forme de manière à passer à travers ledit film de résine thermoplastique de manière à passer à mi-chemin à travers ladite couche de conception perméable à l'air ou ladite couche de feutre à retenue de forme.
